# EUROPEAN PATENT SPECIFICATION

(11) **EP 0 543 847 B1**
(45) Date of publication and mention of the grant of the patent: **21.09.1994**
(21) Application number: 91914137.4
(22) Date of filing: 06.08.1991
(51) Int. Cl.: B01D 15/00, B01D 15/08

(54) **APPARATUS FOR THE SELECTIVE REMOVAL OF CHEMICAL SPECIES FROM A FLUID**
VORRICHTUNG ZUM SELEKTIVEN ENTFERNEN CHEMISCHER SPEZIES AUS FLUIDEN
DISPOSITIF SERVANT A LA SUPPRESSION SELECTIVE D'ESPECES CHIMIQUES D'UN FLUIDE

(30) Priority: 11.08.1990 GB 9017655
(43) Date of publication of application: 02.06.1993
(73) Proprietor: KODAK LIMITED, Harrow, Middlesex HA1 4TY (GB); CLINICAL DIAGNOSTIC SYSTEMS, INC., Rochester, New York 14650 (US)
(72) Inventor: BATTS, Gregory Nigel, Bushey, Hertfordshire WD2 3NQ (GB); HALLIGAN, Peter David, Watford, Hertfordshire WD3 3QA (GB)
(74) Representative: Mercer, Christopher Paul
(86) International application number: EP9101477
(87) International publication number: WO9203206

(56) References cited:
- EP-A- 0 105 579
- EP-A- 0 350 252
- WO-A-89/04202
- US-A- 3 664 095
- US-A- 3 988 225

## Description

The invention relates to apparatus for the selective removal of chemical species from a fluid. The chemical species may be biochemical species and include bioproducts such as proteins.

It is known that chemical species in a fluid e.g. a liquid solution or suspension, may be selectively removed and thereby separated from other species by contacting the fluid with a solid material having sites capable of selectively interacting with the species to be removed. Various forms of interaction are possible. For example, the interaction may be predominantly chemical such as ion exchange or chelation, or it may be of a biochemical nature such as the formation of affinity complexes between biochemical molecules, cells or other particulates. If the interaction is reversible, the species which has interacted specifically can be recovered.

The site on the solid material at which interaction occurs may comprise an atom, a group of atoms or a molecule, commonly referred to as a ligand, which is attached to the material and is capable of selectively interacting with the species to be removed.

This type of separation system is also referred to as affinity chromatography. An affinity chromatography material is capable of selectively sorbing a given chemical component from a mixture of components in a fluid by means of interaction between a particular site or sites on ligands on the material and a specific site or sites on the given chemical component.

Affinity interactions may be biospecific. For example, the ligand may be an immunochemical component e.g. a protein which exhibits biospecific affinity for another immunochemical component. An important class of such reactions is that between an antigen (or hapten) and an antibody directed against it. The use of monoclonal antibodies allows highly specific affinity reactions to be carried out.

Examples of antigens, commonly referred to as foreign substances, include viruses, bacteria, bacterial toxins, carbohydrates, hormones, drugs and lectins.

In addition, other reactions between biologically active compounds, such as enzymes and their substrates, are often sufficiently specific and have sufficient affinity to be employed for separations. In addition, small molecules such as amino acids may interact specifically and with sufficient affinity with, for example, proteins to enable separation to be achieved.

Known apparatus for removing a chemical species from solution comprises an affinity chromatography column. The column is packed with beads of a porous polymer gel e.g. crosslinked agarose, to which a ligand has been covalently bonded. For example, such polymer gels are described in U.S. Patent No. 4,330,440.

A number of disadvantages are associated with the use of conventional chromatography columns. The beads are closely packed together which restricts the flow of fluid through the column. Flowrate is low and high pressure is required to improve it. The problem is made worse when soft beads are used which deform under pressure. Channelling can occur within the column. Further, such columns are prone to become blocked when the fluid contains particulate material. Therefore, substantial sample preparation may be required to remove any particulate material likely to cause blocking.

Scale-up of a packed column is limited by the height/width restraints imposed by the high pressure, bead deformation, channeling and blocking problems described above.

EP-A-0 352 917 describes an alternative type of separation apparatus. A coiled polymer-coated sheet is housed in a container such that a fluid can be passed axially or tangentially through the convolutions of the coil. The convolutions of the coil are spaced apart by suitable spacer means e.g. spacer beads to permit fluid flow. The apparatus can be used as a separation system after attaching suitable ligands to the polymer coating. Providing the spacer beads are large enough, no blocking occurs when using a fluid containing particulates e.g. an untreated biological fluid such as serum.

A problem associated with the apparatus of EP-A-0 352 917 is that the benefit of fast operational flowrates and non-blocking properties is offset by low separation capacity. High flowrates are essential to ensure that all the convolutions are accessed by the fluid. An improvement in the separation capacity of the apparatus is desirable.

Another disadvantage of the apparatus described in EP-A-0 352 917 is that the activation of the polymer coating and subsequent coupling of the ligand to the polymer coating takes place inside the apparatus. Greater ease and control of the activation and coupling process is desirable.

The invention provides apparatus which overcomes disadvantages associated with the prior art apparatus.

In accordance with the invention there is provided apparatus for the selective removal of a chemical species from a fluid comprising a housing defining a chamber, the housing having fluid inlet and outlet means, the chamber containing an impervious sheet or sheets arranged in layers wherein the layers are spaced apart from each other by spacer means, the layers being positioned relative to the inlet and the outlet to define a fluid flow path such that, when the apparatus is in use, fluid entering the chamber through the inlet passes between the layers before leaving the chamber through the outlet, characterised in that the space between the layers is partially filled with particulate material capable of selectively removing a chemical species from a fluid, the particulate material being retained between the layers, and the spacer means and the surfaces of the sheet or sheets are inert with regard to the removal of the species from the fluid.

The apparatus can be operated at low pressure and high flowrates. Hence, the time taken for chromatographic separation can be much less than with packed columns. This is possible because the chromatography material is not close packed i.e there is greater void volume and overpacking is prevented. Because the chromatographic particulate material is retained between the layers the problems of channeling and blocking are also overcome. In this way, product life is enhanced. A particular advantage of the invention is that the height/width ratio restraints which apply to conventional columns do not apply to the apparatus described.

As regards the apparatus described in EP-A-0 352 917, the invention overcomes the problem of coupling the ligand to the layers because the chromatographic material used is prepared prior to its insertion in the apparatus. Also, compared with the apparatus of EP-A-0 352 917, the invention provides enhanced separation capacity and enhanced concentration of product in the eluant used to recover the separated product.

The invention is illustrated, by way of example, in the accompanying schematic drawings wherein:
Fig. 1 is a cross sectional view of part of the layers in a preferred embodiment of the invention;
Fig. 2 is a perspective view of the exterior of an apparatus in accordance with the invention;
Fig. 3 is a longitudinal sectional view taken along line 2-2 of Fig. 2; and,
Fig. 4 is a transverse sectional view taken along lines 3-3 of Fig. 2.

The impervious sheet may be formed from a variety of materials. For example, suitable materials include metal, glass and polymeric materials. Many polymeric materials which can be formed into a sheet or film are suitable including, for example, cellulose ethers or esters e.g. cellulose acetate, polyesters e.g poly(ethylene terephthalate), polyolefins e.g. poly(propylene) and poly(vinylchloride).

The thickness of the sheet may vary widely depending on the material from which it is made and on the way the element is used. For compactness, the sheet is preferably as thin as possible while still meeting mechanical stability requirements. As an example, the thickness of the sheet may be from 0.01 to 0.5mm, more preferably from 0.05 to 0.2mm.

Preferably, the sheet is flexible. It is also preferred that the sheet is flat.

The surface of the sheet is preferably inert with regard to the fluid and the chromatographic separation. For use with aqueous fluids, a hydrophilic surface is preferred. For such reasons, the sheet may be coated with a material providing the preferred properties.

The spacer means employed may be selected from a variety of forms. For example, the spacer means may comprise particles attached to a surface of the sheet. Alternatively, spacer rods or a spacer mesh may be used.

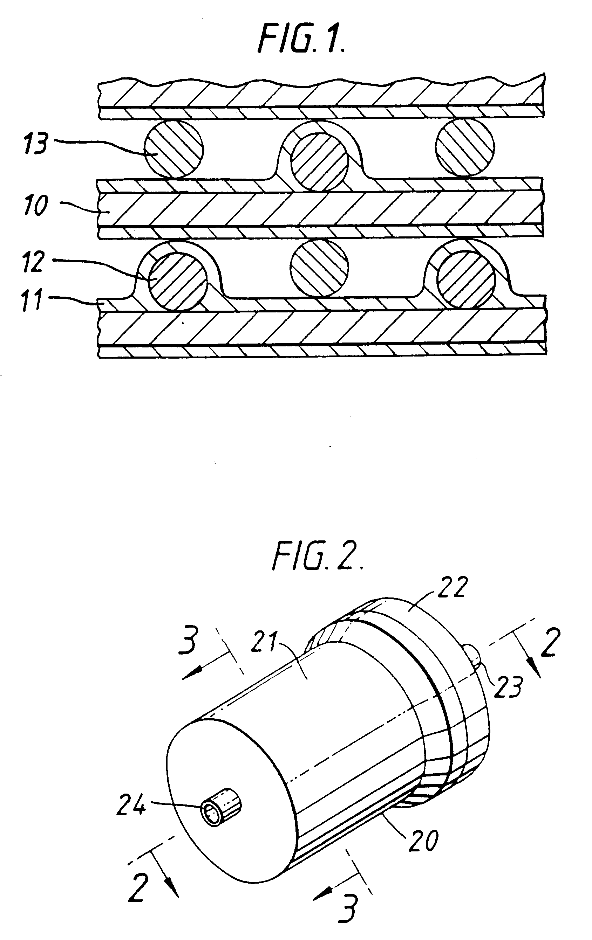

In a preferred embodiment of the invention spacer particles are used. The particles used as spacer means may take a variety of shapes. Any shape is suitable provided that the separation between the surface of the sheet to which the particles are adhered and the surface of an adjacent sheet is uniform. Thus, by appropriate choice of particle size, the sheets can be separated by a small pre-determined distance e.g. from 2 to 500»m. It is generally desirable for the particles to have the same shape and dimension with monodisperse particles being particularly suitable. Preferably, the particles are present as a single layer as shown in Figure 1.

Particles having a substantially spherical configuration are preferred. To separate adjacent layers by the distance mentioned above, beads having a diameter from 2 to 500»m can be used. For some applications, beads having a diameter from 20 to 250»m are preferred.

The particles may be composed of any suitable material. For example, they may be composed of a synthetic polymer or glass.

The density of the particles adhered to the surface is such that the required uniform separation is achieved while maintaining an adequate flow path. Preferably, the majority of the particles do not touch adjacent particles. Preferably, the particles are uniformly distributed over the surface to which they are adhered.

Preferably, spacer particles occupy a minor proportion of the total space between the layers such as from 0.1 to 5 percent, e.g. from 1 to 2 percent.

Particle spacer means may be coated on the surface of the sheet from a coating solution containing the spacer particles. In this way, spacer particle density over the surface can be easily controlled. Further, the coating solution may comprise the means by which the spacer particles are adhered to the surface. For example, the coating solution may comprise an adhesive or a polymer solution.

In a preferred embodiment of the invention, the particles are adhered to the surface by means of a polymer layer extending over the surface of the sheet. In addition to adhering the particles to the surface, the polymer may be chosen to provide the surface with desired properties.

The particulate material capable of selectively removing a chemical species from a fluid may be a particulate material used in conventional affinity chromatography columns. The material is preferably in bead form and may be porous. The material may be retained between the layers in various ways. For example, deformable beads may be used having a diameter equal or greater than the separation distance of the layers. In this case, friction between the beads and the surface of the layers holds the beads in position. Alternatively, beads having a smaller diameter than the distance of separation of the layers may be used provided that they are held in position by the spacer means. For example, when spacer beads are used the chromatography beads may be held in pockets between the spacer beads. When the diameter of chromatography beads is smaller than the distance of separation of the layers, the beads need not be deformable.

Polymer or polymer-coated beads may be used of which a wide variety are commercially available. For example, bead-formed agarose such as commercially available "Sepharose" (trade mark) beads maybe used. The attachment of a ligand to the beads can be achieved by known methods.

Preferably, the chromatography beads occupy up to 75 percent of the total space between the layers e.g. from 10 to 50 percent.

Preferably, at least 20 percent of the total space between the layers e.g. from 48 to 89 percent, is available for fluid flow.

The sheet or sheets contained by the apparatus may be configured in a number of different ways.

For example, a stack of sheets in face to face configuration may be employed, each sheet being separated from adjacent sheets by the spacer means.

In a preferred embodiment of the apparatus, a sheet in the form of a coil is employed wherein the convolutions of the coil are separated by spacer means and the defined flow path is axial relative to the axis of the coil.

In another preferred embodiment, a sheet in the form of a coil is employed wherein the convolutions of the coil are separated by spacer means and the defined flow path is circumferential through the convolutions.

The apparatus of the invention is further described with reference to and as illustrated in Figures 1 to 4 (not to scale).

Fig. 1 shows a cross-sectional view of part of the layers in a preferred embodiment of the invention. A polyethylene terephthalate sheet 10 is coated with a layer of a polymer 11. Spacer beads 12 incorporated in the layer 11 adhere to the support 10. Affinity chromatography beads 13 are retained between the layers of sheet 10.

Fig. 2 is a perspective view of the exterior of an apparatus of the invention. The housing 20 is shown which may be moulded from a plastics material e.g. polypropylene. The housing 20 comprises a cylindrical body portion 21 to which is attached a lid 22. The lid is provided with fluid inlet tube 23 and the body portion is provided with a fluid outlet tube 24.

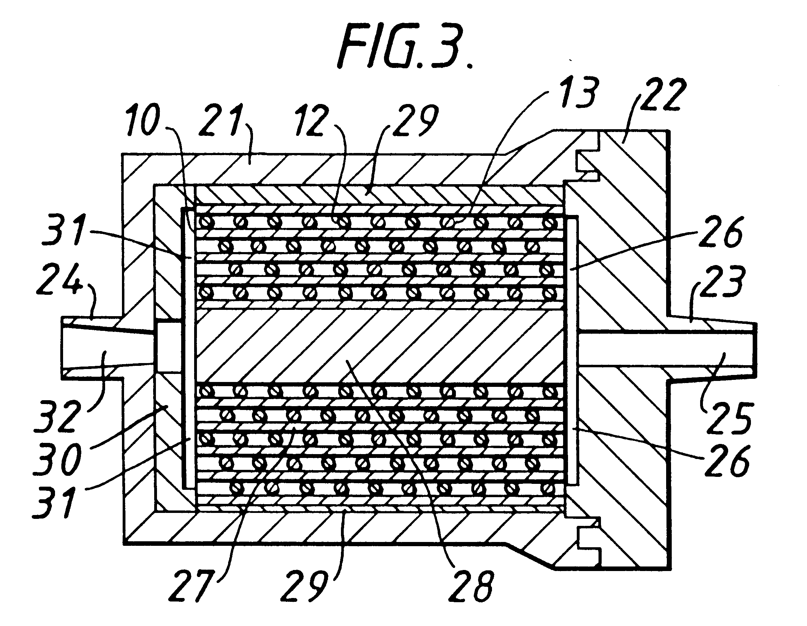

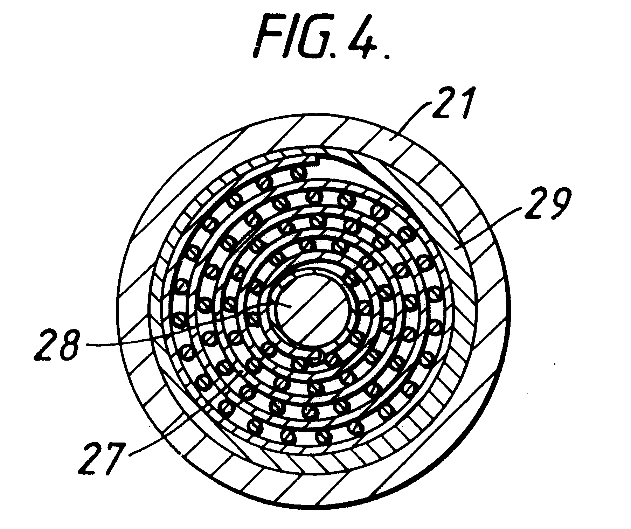

Figs. 3 and 4 are sectional views taken along lines 2-2 and 3-3, respectively, of Fig. 2.

The lid 22 contains an axial passageway 25 through which fluid may be passed into the chamber defined by the housing 20. The inner surface of the lid 22 is provided with grooves 26 extending radially from the passageway 25 to spread the flow of fluid as it enters the chamber. The chamber contains a coil 27 of sheet 10. A polymer-coated sheet having spacer beads 12 adhered thereto of the type shown in Fig.1 is helically wound on a cylindrical core 28. (In Figures 3 and 4, the polymer layer 11 is not shown). Affinity chromatography beads 13 are retained between the layers of sheet 10. The outer winding of the coil is attached to the body of the coil by an adhesive tape 29 which is co-extensive with the outer surface of the coil and provides a fluid-tight seal between the coil and the inner surface of the housing 20.

The coil fills the chamber between the lid 22 at one end and a polypropylene disc 30 held against the circular wall of the chamber at the other end. The surface of the disc facing the coil is provided with grooves 31 extending radially from a central passageway running axially through the disc. This passageway communicates with the passageway 32 passing through the end wall of the housing and outlet tube 24.

When the apparatus is in use, fluid entering the chamber through the inlet passes axially through the convolutions of the coil before leaving the chamber through the outlet.

It is emphasized that the drawings and, in particular, the representation of the coil are schematic. A coil has been produced from such a sheet in the form of a strip 35mm wide and 2m long helically wound on a central cylindrical core having a diameter of approximately 10mm. Such a coil has been contained in an apparatus of the type shown having an overall length of 55mm and an external diameter of 35mm. Clearly, the coil consists of many closely-spaced convolutions which it would be impossible to show adequately in a scale drawing.

In order to manufacture the apparatus, the affinity chromatography beads were coated as a slurry on the polymer-coated sheet which was held horizontally under tension. Excess slurry was removed in a knife-coating operation taking care not to damage the spacer beads adhered to the surface of the sheet. The sheet coated with slurry was then spooled on a cylindrical core. During spooling, any remaining excess slurry was squeezed out as a result of the "nip-roller" effect. The coated spool was taped and inserted into the body 21 of the housing. The lid 22 was sealed to the body by ultrasonic welding.

The invention is further described by way of example as follows.

### Example 1

A device of the type shown in Figures 2 to 4 was made.

The sheet material for the coil was a strip of polyethylene terephalate having a thickness of 0.08mm coated on both sides with a layer of poly(2-hydroxyethyl methacrylate-co-methyl methacrylate-co-methacrylic acid-co-3-chloro-2-hydroxypropyl methacrylate)(16:1:1:2). One side of the strip had silica-coated polystyrene spacer beads having a diameter of 50»m adhered thereto by means of the polymer coating. The concentration of spacer beads was about 200 beads/cm². The strip was 35mm wide and approximately 2m in length.

1.5g freeze dried Sepharose CL6B beads were swollen to 5ml using phosphate buffer solution (PBS). The diameter of the Sepharose beads was 50»m. Cibacron F3GA reactive blue dye was coupled to the beads by the method described in Atkinson et al, Trans. Biochem. Soc., 9, p.290 (1981).

Approximately 2ml of the resulting slurry was coated on the spacer bead side of the strip. The coated strip was wound tightly onto a 10mm diameter core and any excess slurry exuded from the edges of the coil was removed. The convolution spacing was 50»m. The coil was inserted into the body of the device to which the lid was attached and sealed. The device was about 55mm long and about 35mm in diameter.

The device was tested several times with 25ml of filtered and unfiltered rabbit serum over a range of operating conditions to separate albumin. No recirculation steps were employed. A summary of these results is given below in Table 1.

**TABLE 1**

| Flowrate (ml/min) | Elution conditions | Separation yield (mgs) |
|---|---|---|
| 7 | NaSCN/Tris/HCℓ** | 54.0 (some contamination) |
| 7 | octanoate/NaSCN** | 50.0 (33.0 pure albumin) |
| 10 | NaSCN** | 23.8 (some contamination) |
| 20 | NaSCN** | 17.9 (some contamination) |
| 7 | octanoste/NaSCN* | 34.0 (23.0 pure albumin) |
| 10 | octanoate/NaSCN* | 28.1 (21.4 pure albumin) |
| 20 | octanoate/NaSCN* | ∼ 20.0 (not analysed) |

| | | |
|---|---|---|
| ** filtered | | |
| * Unfiltered | | |

No blocking problems were encountered during any of the runs. Electrophoresis shows that all the octanoate elutions are pure product.

By way of comparison, the Sepharose CL6B beads to which Cibacron F3GA reactive blue dye had been coupled were tested for reactivity in a conventional column separation. 25ml of filtered, centrifuged rabbit serum was passed down a 5ml packed column of the material at 2ml/min. Elution with 20mM sodium octanoate recovered ∼ 100mg of pure albumin; determined by sodium dodecyl sulphate polyacrylamide gel electrophoresis (SDS PAGE). Higher yields ∼ 150mg of impure albumin could be recovered using NaSCN/Tris/HCℓ for elution. Therefore approximately 20mg albumin per ml Sepharose was separated using the coupled dye.

These results show that at the lower flowrate the separation capacity of the device of the invention approaches that of a conventional packed column while the separation can be carried out at a much faster rate and without any blockage.

### Example 2

A separation device according to Example 1 was prepared using Sepharose CL4B beads to which Protein-A had been coupled instead of the beads used in that example. Protein A Sepharose CL4B is a commercially available affinity chromatography material for packed column separations using Protein A as the ligand.

Again unfiltered rabbit serum was used as the sample. Approximately 40mg of IgG was separated at 7ml/min by eluting with 0.1M acetic acid pH 2.5.

### Example 3

Two devices containing Sepharose beads having Cibacron F3GA dye coupled thereto were made as in Example 1 and tested for their ability to separate albumin from untreated defrosted rabbit serum. The devices differed from the device of Example 1 in that the length of the coated polyester strip was 11m. One device contained 5ml and the other device contained 10ml of the Sepharose bead slurry. Each device was tested at a sample flowrate of 7ml/min and 20ml/min. NaSCN/Tris/HCl was used as eluant. The results are shown in Table 2.

**TABLE 2**

| Device Configuration | Total capacity in 1 pass (mgs) | Capacity per ml Sepharose (mgs) | Product/eluant concentration (mg/ml) |
|---|---|---|---|
| 5ml beads | | | |
| at 7ml/min | 29.0 | 5.8 | 0.29 |
| at 20ml/min | 21.0 | 4.2 | 0.26 |

| 10ml beads | | | |
|---|---|---|---|
| at 7ml/min | 63.0 | 6.3 | 0.63 |
| at 20ml/min | 55.0 | 5.5 | 0.68 |

For comparison, a device according to EP-A-0 352 917 was tested. The device had the same coil dimensions as the devices used in this Example and utililised Cibacron F3GA dye as the ligand. When used to separate albumin from rabbit serum over a range of flowrates from 5 to 20ml/min the product/eluant concentration was about 0.02mg/ml and the total capacity in one pass was less than 5mg.

### Example 4

A large module was made to test the scale-up potential of a device of the invention. The same sheet material was used as before but the coil was formed from a strip of the sheet 11m long and 12.7cm. wide. The coil contained 70ml of the Sepharose beads used in Example 3 and was tested for its ability to separate albumin from untreated defrosted rabbit serum. NaSCN/Tris/HCl was used as the eluant.

The results are shown in Table 3 below.

**TABLE 3**

| Device Configuration | Total capacity in 1 pass (mgs) | Capacity per ml Sepharose (mgs) | Product eluant concentration (mg/ml) |
|---|---|---|---|
| 70ml beads | | | |
| at 20ml/min | 481.0 | 6.9 | 0.27 |

The separation performance matched the 5ml version of Example 3 for product concentration.

### Example 5

The invention was demonstrated with another affinity separation target protein.

A device was made having the same dimensions and the same coil material as the device used in Example 1. The device differed from that of Example 1 in that it contained 5ml of the Sepharose beads to which Protein A had been coupled.

The device was tested using 20ml of untreated rabbit serum which also contained yeast cells at 1x10⁸ per ml to simulate a fermentation broth. IgG was recovered by elution with 0.1M acetic acid pH3 following a recirculation stage for 20 minutes at the chosen flowrate and flushing to zero background absorption at 280nm. This device was used a total of 15 times without any blockage problems. Table 4 gives the results for a multiple use investigation at 7ml/min and at 15ml/min.

**TABLE 4**

| Device Configuration | Total capacity in 1 pass (mgs) | Capacity per ml Sepharose (mgs) | Product eluant concentration (mg/ml) |
|---|---|---|---|
| 5ml beads | | | |
| at 7ml/min | 47.7 | 9.5 | 0.5 |
| at 15ml/min | 23.7 | 4.7 | 0.3 |

The above data show that the amount of IgG recovered per ml Sepharose is higher than the amount of albumin.

When 0.05%w/w azide was used in all solutions no bacterial growth was detected in the device. None of the solutions needed pre-treatment and cells were not detected in the elution fractions. Electrophoresis of the eluted fractions showed the IgG was as pure as that from a normal column separation.

### Example 6

The invention was demonstrated using a simulated fermentation broth designed to mimic the expression of IgG from cells. The device was the same as that used in Example 5.

The "broth" was made from 700ml PBS (0.05%w/w azide) containing 1x10⁹ yeast cells, 400mg albumin and 9ml rabbit serum. Since the serum had a total protein content of 65mg/ml of which 5mgs were IgG, hence 45mgs IgG were present at a starting concentration of 0.06mg/ml with 940mgs of other proteins.

350ml of the above solution (22.5mgs IgG) were circulated around the device at 7ml/min for 24 hours, flushed to zero optical density (OD) at 280nm, eluted with 0.1M acetic acid and analysed for IgG content and purity. The same solution was passed through twice again in separate operations for 1 hour and the product eluted and analysed.

As measured by OD absorption at 280nm, the amount recovered in three separate fractions was as follows:
i) 16mg eluted in 85ml (0.19mg/ml)
ii) 4.3mg eluted in 65ml (0.07mg/ml)
iii) 3.6mg eluted in 60ml (0.06mg/ml)
   Total 2̅3̅.̅9̅m̅gs
The results show that the recovery efficiency is good. Electrophoresis showed that the IgG product was quite pure and free from other protein contaminants.

## Claims

1. Apparatus for the selective removal of a chemical species from a fluid comprising a housing (20) defining a chamber, the housing (20) having fluid inlet (23) and outlet (24) means, the chamber containing an impervious sheet (10) or sheets arranged in layers wherein the layers are spaced apart from each other by spacer means (12), the layers being positioned relative to the inlet (23) and the outlet (24) to define a fluid flow path such that, when the apparatus is in use, fluid entering the chamber through the inlet (23) passes between the layers before leaving the chamber through the outlet (24), characterised in that the space between the layers is partially filled with particulate material (23) capable of selectively removing a chemical species from a fluid, the particulate material (23) being retained between the layers, and the spacer means (12) and the surfaces (11) of the sheet or sheets (10) are inert with regard to the removal of the species from the fluid.

2. An apparatus according to claim 1 wherein the particulate material (13) is an affinity chromatography material in bead form.

3. An apparatus according to claim 2 wherein the beads (13) are porous.

4. An apparatus according to claim 2 or claim 3 wherein the beads (13) are agarose beads to which a ligand is attached.

5. An apparatus according to any one of claims 2 to 4 wherein the beads (13) are deformable and have a diameter at least as great as the distance between the layers.

6. An apparatus according to any one of the preceding claims wherein the distance between the layers is from 2 to 500»m.

7. An apparatus according to any one of the preceding claims wherein the layers are spaced apart from each other by spacer beads (12).

8. An apparatus according to any one of the preceding claims wherein at least 20 percent of the total space between the layers is available for fluid flow.

9. Use of an apparatus according to any one of the preceding claims for the removal of a chemical species from a fluid.

## Patentansprüche

1. Vorrichtung für die selektive Entfernung einer chemischen Spezies aus einem Fluid mit einem Gehäuse (20), das eine Kammer bildet, wobei das Gehäuse (20) einen Fluid-Einlaß (23) und einen Fluid-Auslaß (24) aufweist, und die Kammer ein undurchlässiges flächiges Material (10) oder flächige Materialien aufweist, die in Schichten angeordnet sind, wobei die Schichten voneinander durch Abstandsmittel (12) getrennt sind, und die Schichten in Bezug zum Einlaß (23) und zum Auslaß (24) derart angeordnet sind, daß sie eine Fluid-Strömungsbahn bilden, derart, daß wenn die Vorrichtung im Gebrauch ist, Fluid, das in die Kammer durch den Einlaß (23) eingeführt wird, zwischen den Schichten hindurchgeführt wird, bevor es die Kammer durch den Auslaß (24) verläßt, dadurch gekennzeichnet, daß der Raum zwischen den Schichten teilweise mit teilchenförmigem Material (13) gefüllt ist, das eine chemische Spezies aus einem Fluid selektiv zu entfernen vermag, wobei das teilchenförmige Material (13) zwischen den Schichten zurückgehalten wird, und die Abstandsmittel (12) und die Oberflächen (11) des flächigen Materials oder der flächigen Materialien (10) inert bezüglich der Entfernung der Spezies aus dem Fluid sind.

2. Vorrichtung nach Anspruch 1, bei der das teilchenförmige Material (13) ein Affinitäts-Chromatographie-Material in Form von Kügelchen ist.

3. Vorrichtung nach Anspruch 2, in der die Kügelchen (13) porös sind.

4. Vorrichtung nach Anspruch 2 oder Anspruch 3, in der die Kügelchen (13) Agarose-Kügelchen sind, an die ein Ligand gebunden ist.

5. Vorrichtung nach einem der Ansprüche 2 bis 4, in der die Kügelchen (13) deformierbar sind und einen Durchmesser aufweisen, der mindestens so groß ist wie die Entfernung zwischen den Schichten.

6. Vorrichtung nach einem der vorstehenden Ansprüche, in der die Entfernung zwischen den Schichten 2 bis 500 »m beträgt.

7. Vorrichtung nach einem der vorstehenden Ansprüche, in der die Schichten voneinander durch Abstands-Kügelchen (12) getrennt sind.

8. Vorrichtung nach einem der vorstehenden Ansprüche, in der mindestens 20 % des gesamten Raumes zwischen den Schichten für die Fluid-Strömung zur Verfügung steht.

9. Verwendung einer Vorrichtung nach einem der vorstehenden Ansprüche zur Entfernung einer chemischen Spezies aus einem Fluid.

## Revendications

1. Dispositif de suppression sélective d'espèces chimiques d'un fluide comprenant un réceptacle (20) définissant une chambre, le réceptacle (20) ayant des moyens d'entrée (23) et des moyens de sortie (24) du fluide, la chambre contenant une feuille ou des feuilles imperméables (10) disposées en couches dans laquelle les couches sont espacées les unes des autres par des moyens d'espacement (12), les couches étant positionnées par rapport à l'entrée (23) et à la sortie (24) pour définir un espace d'écoulement de fluide tel que, lorsque le dispositif est en fonctionnement, le fluide entre dans la chambre par l'entré (23), passe entre les couches avant de quitter la chambre par la sortie (24), caractérisé en ce que l'espace entre les couches est partiellement rempli par un composé particulaire (23) apte à supprimer de manière sélective des espèces chimiques d'un fluide, le matériau particulaire (13) étant retenu entre les couches et les moyens d' espacement (12) et les surfaces (11) de la feuille ou des feuilles (10) sont inertes eu égard à la suppression des espèces du fluide.

2. Dispositif selon la revendication 1, dans lequel le matériau particulaire (13) est un matériau de chromatographie d'affinité sous forme de perle.

3. Dispositif selon la revendication 2, dans lequel les perles (13) sont poreuses.

4. Dispositif selon la revendication 2 ou la revendication 3, dans lequel les perles (13) sont des perles d'agarose auxquelles a été fixé un ligand.

5. Dispositif selon l'une quelconque des revendications 1 à 4, dans lequel les perles (13) sont déformables et possèdent un diamètre au moins aussi grand que la distance entre les couches.

6. Dispositif selon l'une quelconque des revendications précédentes, dans lequel la distance entre les couches est comprise entre 2 et 500 »m.

7. Dispositif selon l'une quelconque des revendications précédentes, dans lequel les couches sont espacées l'une de l'autre par des perles d'espacement (12).

8. Dispositif selon l'une quelconque des revendications précédentes dans lequel au moins 20 pourcent de l'espace total entre les couches sont utilisés pour l'écoulement du fluide.

9. Utilisation d'un dispositif selon l'une quelconque des revendications précédentes pour supprimer des espèces chimiques d'un fluide.
